# EUROPEAN PATENT SPECIFICATION

(11) **EP 1 233 160 B1**
(45) Date of publication and mention of the grant of the patent: **25.04.2007**
(21) Application number: 02100077.3
(22) Date of filing: 29.01.2002
(51) Int. Cl.: F02B 1/12, F02B 47/08, F02M 25/07, F02D 13/02

(54) **Engine with controlled auto-ignition**
Brennkraftmaschine mit gesteuerter Selbstzundung
Moteur à combustion avec autoallumage réglé

(30) Priority: 19.02.2001 GB 0104025
(43) Date of publication of application: 21.08.2002
(73) Proprietor: Ford Global Technologies, LLC, Dearborn, MI 48126 (US)
(72) Inventor: Ma, Thomas, Tsoi-Hei, South Woodham Ferrers CM3 5YL (GB)
(74) Representative: Messulam, Alec Moses

(56) References cited:
- EP-A- 0 886 050
- WO-A-99/42718
- GB-A- 2 353 070
- PATENT ABSTRACTS OF JAPAN vol. 2000, no. 13, 5 February 2001 (2001-02-05) & JP 2000 274246 A (OSAKA GAS CO LTD;TOKYO GAS CO LTD; TOHO GAS CO LTD), 3 October 2000 (2000-10-03)

## Description

### Field of the invention

The present invention relates to a multi cylinder internal combustion engine wherein each cylinder is capable of operating with controlled auto ignition within a predetermined load/speed range.

### Background of the invention

It is possible to operate premixed charge internal combustion engines under conditions in which controlled auto ignition of the charge occurs. This mode of engine operation has been recognised to be very beneficial from the points of view of reduced NOx emission, even running and improved fuel economy, in particular under low load conditions.

One way of achieving controlled auto ignition is to retain a high proportion of hot residual gases in the combustion chambers. When a new premixed charge is admitted, the residual gases serve to raise the temperature in the combustion chamber to the point where the fuel in the premixed charge ignites spontaneously. When this occurs, combustion commences simultaneously at multiple ignition sites giving a fast burn and even temperature. The even temperature is believed to be responsible for low generation of NOx and the fast burn results in high thermal efficiency.

There is however a lower limit on the ratio of residual gases to fresh intake charge outside which auto ignition cannot occur which accounts for the higher load limit of the auto ignition range. Under low load operating conditions, it is required to have a high proportion of residual gases and a low proportion of newly admitted premixed charge. However, with reducing load, the heat produced during each cycle is reduced accompanied by a consequent drop in exhaust temperature. Eventually a point is reached where the residual gases are too cold to bring about auto ignition and this accounts for the low load limit of the auto ignition range.

Under certain conditions, it is possible to operate an engine in auto ignition mode for a substantial proportion of its running time but nevertheless there are frequent occasions, such as idling and steady low load operation, when auto ignition could yield significantly reduced fuel consumption but these conditions lie below the low load limit of the auto ignition range.

### Object of the invention

The present invention therefore seeks to increase the proportion of running time that an engine can operate with auto ignition when operating under low to medium load conditions.

### Summary of the invention

According to the present invention, there is provided a multi cylinder internal combustion engine wherein each cylinder is capable of operating within a predetermined auto ignition load/speed range, wherein means are provided for disabling selected cylinders when the average cylinder load lies below the auto ignition load/speed range so as to raise the load on the remaining power producing cylinders and enable them to continue to operate within the auto ignition load/speed range.

In order for the engine output to remain constant after cylinder disablement, it is essential to increase the charge supplied to the remaining cylinders. In so doing, the operating cylinders are made to operate under a higher load, bringing them within the auto ignition range. In this way, the invention allows the load/speed range within which the whole engine may benefit from controlled auto ignition to be extended to include lower engine loads.

The manner in which the charge to the active cylinders is increased will depend on the manner in which mass air flow is controlled. If the engine has an intake throttle, then the throttle position and the fuel delivered to the active cylinders may be increased in synchronism with the disablement of the cylinders so that there should be no perceptible change in output power. Similar synchronisation can also be achieved in an engine in which mass air flow is controlled by the use of variable valve timing.

It is possible to disable selected cylinders in a variety of known ways. For example, it would suffice to cut the fuel supply to the cylinder. In an engine with a three way catalytic converter, this would not be desirable as excess air would enter the exhaust system but this can be avoided by also shutting off the air supply to the cylinder. To this end, it would be possible to provide a butterfly throttle in the intake passage leading to the cylinder but more preferably the intake and exhaust valves may be deactivated.

Because engines operating with controlled auto ignition produce very low NOx, it is not essential for a three way catalyst to operate as anything more than an oxidation catalyst and excess air would not unduly affect the quality of the emissions. For this reason, it is preferred to rely on interruption of the fuel supply alone, as this can be implemented without additional hardware.

From mapping the operation of the engine, it is possible to determine the load/speed range within which auto ignition can be achieved reliably. Hence it is possible in one embodiment of the invention to disable selected cylinders when the engine is sensed to be operating below this range.

As earlier explained, the reason that auto ignition does not occur reliably below the range is that the exhaust gas temperature drops to a point where it cannot bring about ignition of the freshly admitted charge. It is therefore alternatively possible to measure exhaust gas temperature directly and to resort to cylinder disablement when the temperature drops below a first threshold. If the engine is operating with a reduced number of cylinder, all cylinders can again be rendered operative when the exhaust temperature of the working cylinders is sensed to exceed a second higher threshold.

### Brief description of the drawings

The invention will now be described further, by way of example, with reference to the accompanying drawings, in which:
Figure 1 is a schematic block diagram of an engine embodying the invention, and
Figure 2 is a load/speed map showing the region within which controlled auto ignition can occur reliably.
Figure 3 is a valve timing diagram showing the manner in which the relative phasing to the exhaust and intake camshafts can be used to control the composition of the trapped cylinder charge, and
Figure 4 is a flow chart outlining part of the control algorithm implemented in the control system.

### Detailed description of the preferred embodiments

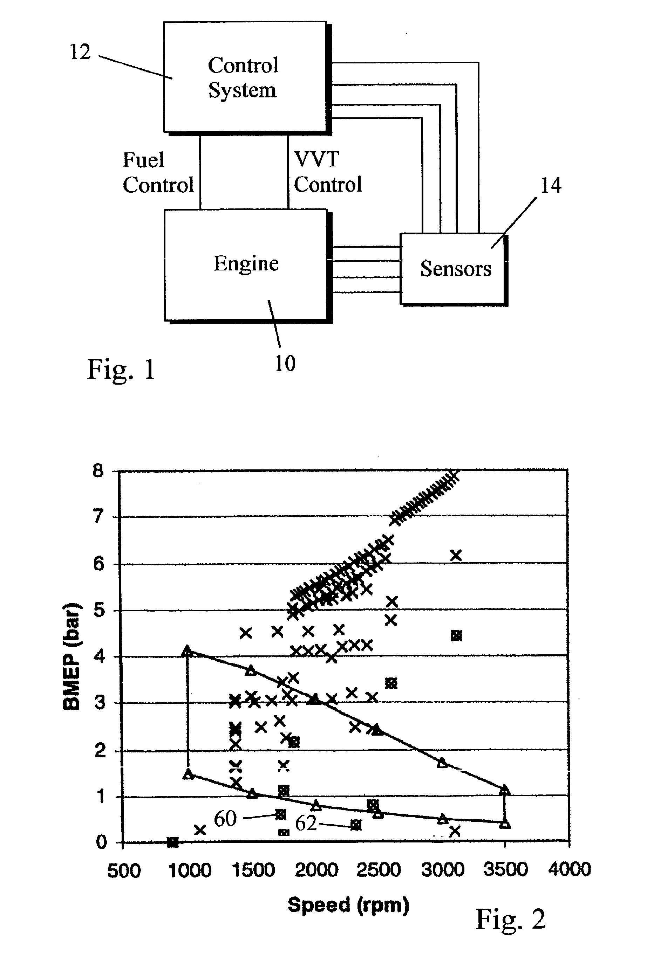

Figure 1 shows an engine 10 which is a premixed charge internal combustion engine. The engine is controlled by a control system 12 which receives signals from sensors 14 to indicate various operating parameters, such as load, speed, exhaust temperature etc. The control system and the engine are generally conventional and do not need to be described in detail within the context of the present invention.

The engine load can be varied in a conventional manner, such as by use of a butterfly throttle, but the following description is based on an engine in which camshaft phasing is used to vary the engine output. The engine has two sets of cams, one set for use in the controlled auto ignition (CAI) mode and the other with conventional charge ignition.

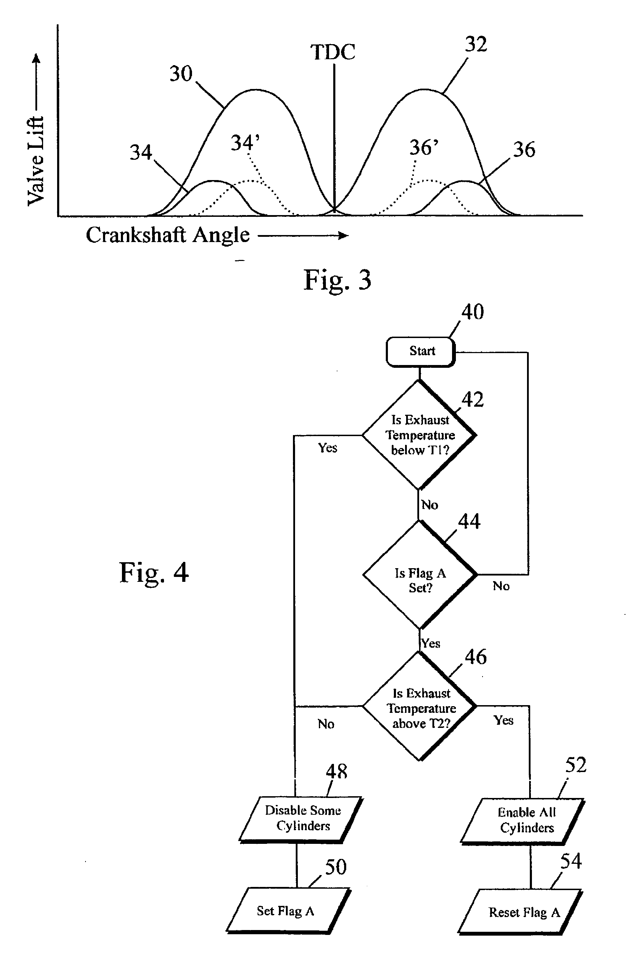

The intake and exhaust valve openings for both sets of cams are shown in Figure 3. During operation at high load and idling, cams with conventional profiles are used to produce the exhaust valve event 30 and the intake event 32. During operation in CAI mode, the engine is switched (using selectable tappets or cam followers) to cams of a different profile that produce the exhaust event 34 and the intake event 36. These events have a shorter duration and a lower valve lift and they can also be phase shifted relative to the crankshaft to the positions represented by the curves 34 and 36 drawn in dotted lines in Figure 3.

When the phase of the intake and exhaust camshaft is set to correspond to the curves 34 and 36 in Figure 3, the exhaust valve is closed early in the exhaust stroke and traps a large proportion of the residual gases within the combustion chamber. This trapped mass of residual gases is compressed by the further movement of the piston so that the pressure in the combustion chamber rises to a peak as the piston approaches top dead centre (TDC). After TDC, the intake valve remains closed and the trapped gases expand reducing the temperature and pressure in the combustion chamber. Then the intake valve opens to admit a fresh premixed charge which should preferably fill the top of the chamber as the piston travels to its bottom dead centre (BDC) position without mixing significantly with the trapped residual gases from the previous operating cycle. At the end of the compression stroke that follows, the high temperature of the residual gases causes auto ignition of the fuel in the premixed charge.

As the camshaft timing is varied to move the valve events to the position represented by the curves 34 and 36 , the exhaust valve closes ever later in the exhaust stroke to trap less and less residual charge and at the same time the intake valve opens ever earlier in the intake stroke to admit more of the premixed charge into the cylinder. In this way, the quantity of premixed charge in the cylinder is increased and the quantity of tapped residual charge is decreased to increase the output power of the engine.

As earlier explained, controlled auto ignition can only be achieved reliably within a small range of the larger load/speed map of the engine as shown in Figure 2. Within the area bounded by the closed curve in Figure 2 passing through points marked by triangles, controlled auto ignition can be achieved reliably but outside this area conventional charge ignition must be relied upon. The various crosses on the map represent points at which the engine is operated during a statutory drive cycle. Points represented by a cross and a circle are cruising points which are important because the engine may operate for prolonged periods at these points.

While the CAI mode encompasses an important area of the load/speed map, it is found that it excludes important cruising points, such as when the vehicle is cruising below 40 kph. These points, designated 60 and 62 in Figure 2, lie just below the CAI range.

To allow the engine to operate in CAI mode under these conditions, the invention proposes disablement of some of the cylinders at the same time as increasing the load on the other cylinders to bring their operation within the CAI range. Though the engine as a whole would in this case have to operate outside the CAI range, the operative other cylinders will be operating within the CAI range, thereby achieving the desired improvements in even running and improved fuel economy that result from the improved combustion efficiency. There will be also be a reduction in NOx emissions but as an engine operating under low load does not generate much NOx, the improvement is less significant.

The trigger to disable selected cylinders may be produced in the control system 12 by evaluating if the engine is operating near the lower limit of the CAI range. It is preferred however to rely on direct measurement of exhaust gas temperature as the lower limit of the CAI is the result of the residual gases being too cold to initiate auto ignition.

A sub routine to be implemented in the control system 12 to disable selected engine cylinders in response to a reduction in exhaust gas temperature (which is of course related to the residual gas temperature) will now be described with reference to Figure 4.

After the start 40 of the sub routine, the temperature of the exhaust gases is compared in decision block 43 with a lower threshold temperature T1. If the exhaust gas temperature is less than T1 then in block 48 selected cylinders are disabled and in block 50 a flag A is set to indicate that the engine is only firing on some cylinders.

The cylinder disablement is carried out by simply cutting off the fuel to the cylinders to be disabled and at the same time increasing the fuel and air supplied to the remaining cylinders to avoid a sudden change in power output. The control system 12 in Figure 1 thus supplies fuel control and VVT (variable valve timing) control signals to the engine to effect cylinder disablement without consequent reduction in engine output power. The increased load of the operating cylinders will bring them back into the CAI range and their exhaust gas temperature will rise.

On the next occasion that the sub routine of Figure 4 is called, the exhaust gas temperature will be above T1 but the engine will not be firing on all cylinders and the flag A will be set. The logic flow will in this case pass from decision block 42 through block 44 to block 46 where the temperature will be compared with a higher second temperature threshold T2. The need for T2 to be greater than T1 is to introduce hysteresis and thereby avoid control instability (cylinders being disabled then enabled in consecutive cycles). T2 is also a temperature that is sufficiently high to ensure that the engine as a whole will operate reliably in the CAI range if firing on all cylinders. If the temperature T2 is not exceeded then the engine continues to operate with some cylinders disabled but if temperature T2 is exceeded then in block 52 all cylinders are again enable (fuel and air supply is resumed to all cylinders) and flag A is reset in block 54.

If T1 is exceeded while the engine is firing on all cylinders then in decision block 44 the flow will return to the start 40 until the temperature again drop below the lower threshold T1.

It should be mentioned that the invention may be applied to compression ignition as well as spark ignition engines. In the former case, during in the CAI mode of operation, a premixed charge can be injected into the intake port instead of the fuel being injected directly into the combustion chamber.

## Claims

1. A multi cylinder internal combustion engine (10) wherein each cylinder is capable of operating within a predetermined auto ignition load/speed range, **characterised in that** means (12,14) are provided for disabling selected cylinders when the average cylinder load lies below the auto ignition load/speed range so as to raise the load on the remaining power producing cylinders and enable them to continue to operate within the auto ignition load/speed range.

2. An engine as claimed in claim 1, **characterised in that** the means for disabling selected cylinders are operative to interrupt the fuel supply to the cylinders to be disabled at the same time as increasing the air and fuel supply to the remaining cylinders.

3. An engine as claimed in claim 2, **characterised in that** the means for disabling selected cylinders are operative to increase the air supply to the remaining cylinders by varying the engine valve timing.

4. An engine as claimed in any preceding claim, **characterised in that** the means for disabling selected cylinders (48) are activated by sensing means (42) when the exhaust gas temperature drops below a first threshold (T1).

5. An engine as claimed in claim 4, **characterised in that** further means (46) for are provided for discontinuing cylinder disablement in response to the exhaust temperature of the firing cylinders exceeding a second higher threshold (T2).

## Patentansprüche

1. Mehrzylinder-Brennkraftmaschine (10), worin jeder Zylinder in der Lage ist, innerhalb eines vorgegebenen Last-/Drehzahlbereiches mit Selbstzündung zu arbeiten,
**dadurch gekennzeichnet, daß** Mittel (12, 14) vorgesehen sind, ausgewählte Zylinder abzuschalten, wenn die mittlere Zylinderlast unter dem Selbstzündungs-Last-/Drehzahlbereich liegt, so daß die Auslastung der verbleibenden, leistungserzeugenden Zylinder erhöht wird und diese in die Lage versetzt werden, weiter innerhalb des Selbstzündungs-Last-/Drehzahlbereiches zu arbeiten.

2. Motor nach Anspruch 1, **dadurch gekennzeichnet, daß** die. Mittel zur Abschaltung ausgewählter Zylinder so wirken, daß sie die Kraftstoffzufuhr zu den abzuschaltenden Zylindern unterbrechen und gleichzeitig die Luft- und Kraftstoffzufuhr zu den verbleibenden Zylindern erhöhen.

3. Motor nach Anspruch 2, **dadurch gekennzeichnet, daß** die Mittel zur Abschaltung ausgewählter Zylinder so wirken, daß sie die Luftzufuhr zu den verbleibenden Zylindern erhöhen, indem sie die Ventilsteuerzeiten des Motors verstellen.

4. Motor nach einem beliebigen der vorangehenden Ansprüche, **dadurch gekennzeichnet, daß** die Mittel zum Abschalten ausgewählter Zylinder (48) von Sensormitteln (42) aktiviert werden, wenn die Abgastemperatur unter einen ersten Schwellenwert (T1) fällt.

5. Motor nach Anspruch 4, **dadurch gekennzeichnet, daß** des weiteren Mittel (46) vorgesehen sind, um die Abschaltung der Zylinder zu unterbrechen, wenn die Abgastemperatur der zündenden Zylinder einen zweiten höheren Schwellenwert (T2) überschreitet.

## Revendications

1. Moteur à combustion interne à cylindres multiples (10) dans lequel chaque cylindre peut fonctionner dans une plage de charge/régime d'autoallumage prédéterminée, **caractérisé en ce que** des moyens (12, 14) sont prévus pour désactiver ou mettre hors service les cylindres sélectionnés lorsque la charge de cylindres moyenne se situe en dessous de la plage de charge/régime d'autoallumage de façon à augmenter la charge sur les cylindres restants produisant de l'énergie et à leur permettre de continuer à fonctionner dans la plage de charge/régime d'autoallumage.

2. Moteur selon la revendication 1, **caractérisé en ce que** les moyens pour désactiver ou mettre hors service les cylindres sélectionnés sont opérationnels pour interrompre l'alimentation en carburant vers les cylindres à désactiver ou à mettre hors service au moment d'augmenter l'alimentation en air et en carburant vers les cylindres restants.

3. Moteur selon la revendication 2, **caractérisé en ce que** les moyens pour désactiver les cylindres sélectionnés sont opérationnels pour augmenter l'alimentation en air vers les cylindres restants en faisant varier le réglage de distribution ou réglage temporel des soupapes du moteur.

4. Moteur selon l'une quelconque des revendications précédentes, **caractérisé en ce que** les moyens pour désactiver les cylindres sélectionnés (48) sont activés par des moyens de détection (42) lorsque la température des gaz d'échappement chute en dessous du premier seuil (T1).

5. Moteur selon la revendication 4, **caractérisé en ce que** des moyens supplémentaires (46) sont prévus pour poursuivre une désactivation des cylindres en réponse à la température d'échappement des cylindres fonctionnant, dépassant un second seuil plus élevé (T2).
